# EUROPEAN PATENT SPECIFICATION

(11) **EP 0 448 225 B1**
(45) Date of publication and mention of the grant of the patent: **13.12.1995**
(21) Application number: 91301315.7
(22) Date of filing: 20.02.1991
(51) Int. Cl.: G06F 1/033, G06F 3/033

(54) **Input information processing apparatus using pointing means**
Eingabeinformationsverarbeitungsgerät mit Zeigereinrichtung
Appareil de traitement d'informations d'entrées utilisant des moyens de pointage

(30) Priority: 22.02.1990 JP 42062/90
(43) Date of publication of application: 25.09.1991
(73) Proprietor: SONY CORPORATION, Tokyo 141 (JP)
(72) Inventor: Hirayama, Tomoshi, c/o Patents Division, Shinagawa-ku, Tokyo 141 (JP); Sano, Ikuya, c/o Patents Division, Shinagawa-ku, Tokyo 141 (JP)
(74) Representative: Cotter, Ivan John

(56) References cited:
- EP-A- 0 162 300
- DE-A- 3 540 626

## Description

The present invention generally relates to input information processing apparatus and, more particularly, to an input information processing apparatus suitable for use in a portable computer or the like in which information is input from an input tablet provided on the surface side of a display panel by an input pen.

Patent specification US-A-4947156 published August 7, 1990 and in the same family as Patent application DE-A-3540626 published May 22, 1986, describes such an apparatus comprising a pointer for inputting coordinate information; a display for displaying data input by the pointer; a tablet on a display surface of the display for detecting a position pointed to by the pointer; a power switch; and control means for judging whether or not the pointer is pointing at a predetermined area of the tablet as the power switch is switched on, and if so for executing an unusual process.

This apparatus is a modification of an apparatus in which the unusual process is initiated by operating a key to one side of the display and tablet. In the modification, the key is built in the tablet and operated by the pointer. It would appear that the implementation of this modification contemplated in US-A-4947156 would be either to provide a command input area located in an area of the tablet not superimposed on the display, or to provide physical buttons in the tablet. A command input area visible on a tablet and operable with a pointer is known from patent specification EP-A-0162300. In that specification, the tablet has a larger size than the active display, and the tablet is divided into a coordinate input area corresponding to the active display area, and a panning instruction area and a scrolling control area which are permanently visible command areas to one side of the display area.

The present invention according to claim 1 is characterised in that said predetermined area of the tablet corresponds to an area of the display surface which is normally used for displaying data input by the pointer. The invention therefore provides the advantage that areas of the tablet and the display can correspond and the whole of the tablet and display can be used for inputting and displaying coordinate information during normal use, and yet the tablet can be used for initiating an unusual process when the power is switched on.

Preferably, the control means is operable to judge whether or not, as the power switch is switched on, the pointer is pointing at one of a plurality of such predetermined areas of the tablet corresponding to areas of the display surface normally used for displaying input data, and if so to execute a respective one of a plurality of such unusual processes. Thus more than one unusual process can be initiated when the power is switched on.

Preferably, said area of the display surface, or the sum of said area of the display surface, substantially fill the total area of the display surface. For example if there are two such areas, they can be formed by the left half and the right half of the display surface, and thus a user does not need to be particularly accurate with the pointer in order to initiate one or the other of the unusual processes.

Other preferred features of the invention are set forth in the appended claims.

A specific embodiment of the present invention will now be described, by way of example, with reference to the accompanying drawings, in which:
Figure 1 is a perspective view of an embodiment of an input information processing apparatus forming part of a portable computer;
Figure 2 is a systematic block diagram showing a main electrical arrangement of the portable computer shown in Figure 1; and
Figures 3 and 4 are flowcharts, respectively, to which references will be made in explaining routines executed by a central processing unit of the portable computer shown in Figure 1.

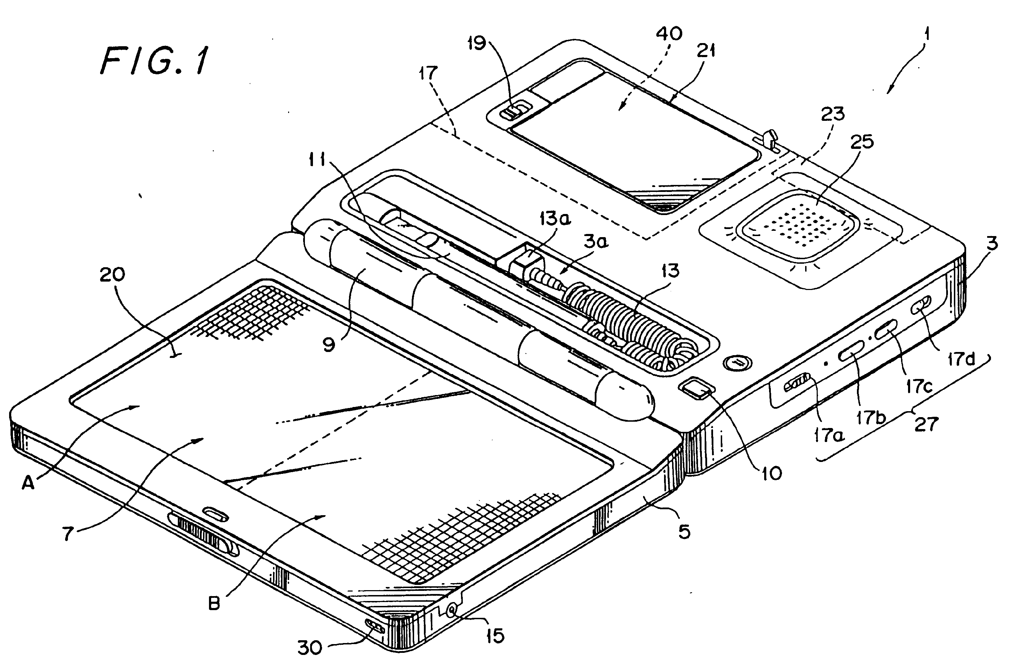

As shown in Figure 1, a portable computer 1 is composed of a housing 3 in which main electrical sections and so on are housed and a display unit housing 5 foldably and unfoldably interconnected to the housing 3 by a hinge 9.

The hinge 9 includes therein a flexible board (not shown) or the like for transmitting power, various signals and the like from the housing 3 side to the display unit housing 5 side.

The housing 3 has a recessed portion 3a which houses therein an input pen 11 and a cord 13 whose one end is coupled to the input pen 11.

The cord 13 has at the other end thereof a connection terminal 13a which is connected to a terminal 15 provided on the side wall of the display unit housing 5. By means of the connection terminal 13a and the terminal 15, the input pen 11 can be electrically connected to the portable computer 1.

The display unit housing 5 has a display unit 7 formed of a liquid crystal display (LCD) device or the like, and an input tablet 20 formed of a transparent touch-sensitive device or the like is provided on a front surface of a display panel formed on the display unit 7.

When the terminals 13a, 15 are connected and the input pen 11 is moved on the surface of the input tablet 20, electrostatic capacitance between the top of the input pen 11 and the tablet 20 is changed and an amount of the thus changed electrostatic capacitance is detected and output from the connection terminal 13a.

Even when the point of the pen 11 is not in contact with the tablet 20, coordinate information of the point of the pen 11 is detected and a marker shaped, for example, as a cross is displayed on the display panel of the display unit 7 at its position in which the point of the pen 11 is opposed to the tablet 20.

The housing 3 also has a power switch 10 and has at portions shown by broken lines a socket 17 for receiving an IC card such as a ROM, RAM or the like therein for expanding the function and an expansion socket 23 for connection to an external device (not shown).

A power supply source 40 is housed in a recessed portion provided with a lid 21 which can be opened and closed by releasing a lock mechanism 19.

Further, the display unit housing 5 also has a microphone 30 and audible signals input through the microphone 30 can be recorded (in a solid state recording fashion) and reproduced when predetermined switches on a switch pad 27 provided on the side wall of the housing 3 are operated.

More specifically, when a recording switch 17a is turned ON, the recording is started, and when a playback switch 17b is turned ON, then a recorded voice message is reproduced and emanated from a loudspeaker 25.

When a stop switch 17c is turned ON, the recording or reproduction is stopped, and there is a volume adjusting switch 17d.

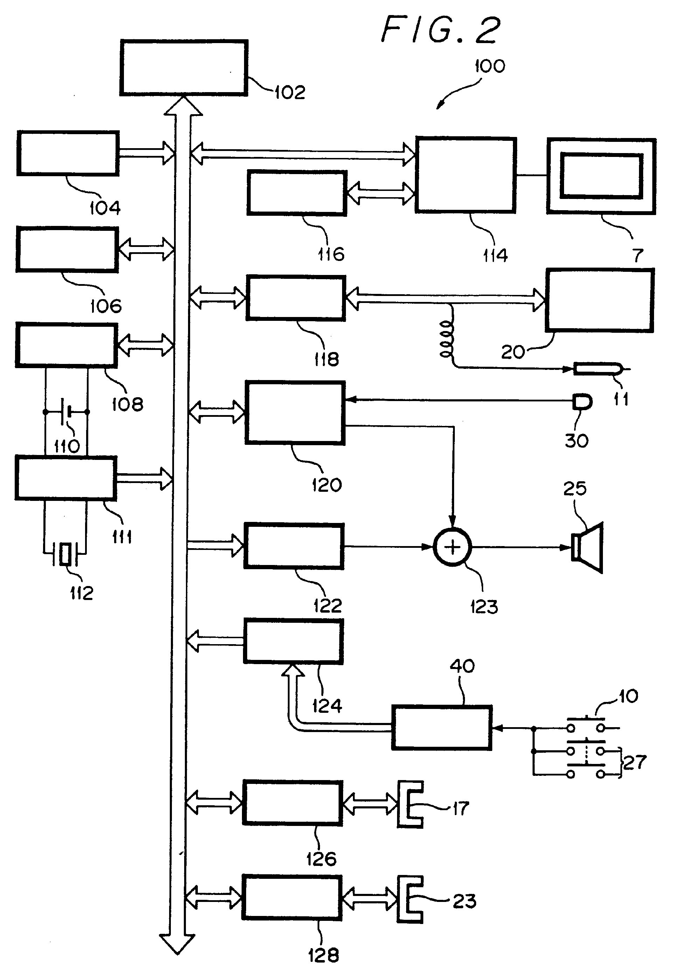

Figure 2 shows in system block form a main electrical arrangement unit 100 of the portable computer 1. The entire operation of this electrical arrangement unit 100 is controlled by a control unit which mainly comprises a CPU 102, a program ROM 104 and a working RAM 106.

Under the control of the CPU 102, display data is written in a V-RAM (video RAM) 116 through a display controller 114 and the display data is displayed on the display panel of the display unit 7.

Further, output signals of the input tablet 20 and the input pen 11 are supplied through a tablet interface 118 to the CPU 102, and an audio signal from the microphone 30 is supplied through a solid state recording processor section 120 to the CPU 120 and is thereby analog-to-digital (A/D) converted. The thus converted audio signal is stored in a backup RAM 108 to which a power supply source 110 is connected.

A timer 111 is also energized by the power supply source 110, and the timer 111 counts the number of clock pulses obtained from a quartz oscillator 112 to thereby produce present data relative to year, month, date and time.

When supplied with data of, for example, a phone number from the CPU 102, a dialler circuit 122 generates an audio signal corresponding to a dual tone signal transmitted to a telephone line network.

An analog signal, which results from digital-to-analog (D/A) converting the audio signal stored in the backup RAM 108 by the solid state recording processor section 120 or the dual tone signal generated from the dialler circuit 122 is output from the loudspeaker 25 through a mixer 123.

Outputs of the power supply switch 10 or the switch pad 27 are supplied through the power supply source 40 and a switch interface 124 to the CPU 102, and outputs of the IC card socket 17 and the expansion socket 23 are supplied respectively through an IC card interface 126 and an expansion interface 128 to the CPU 102.

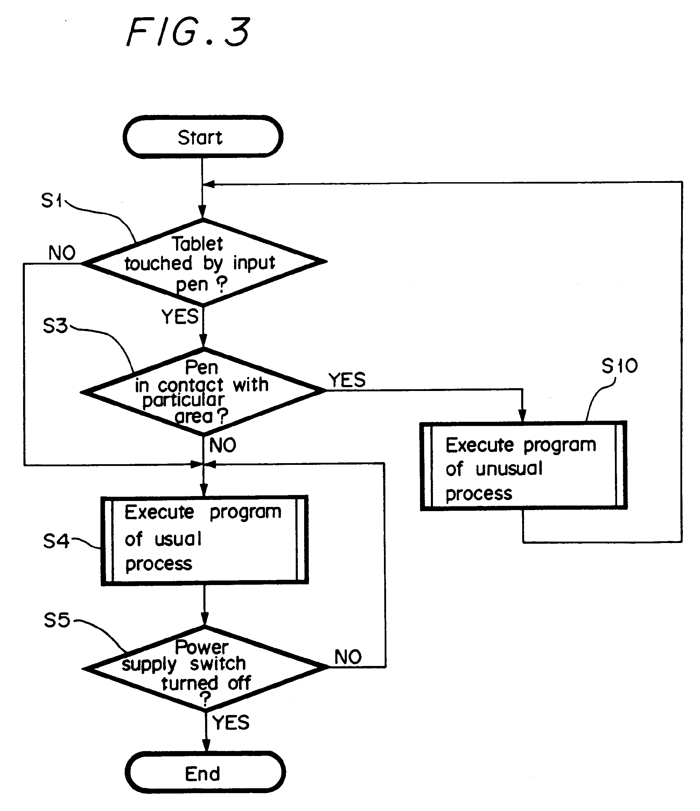

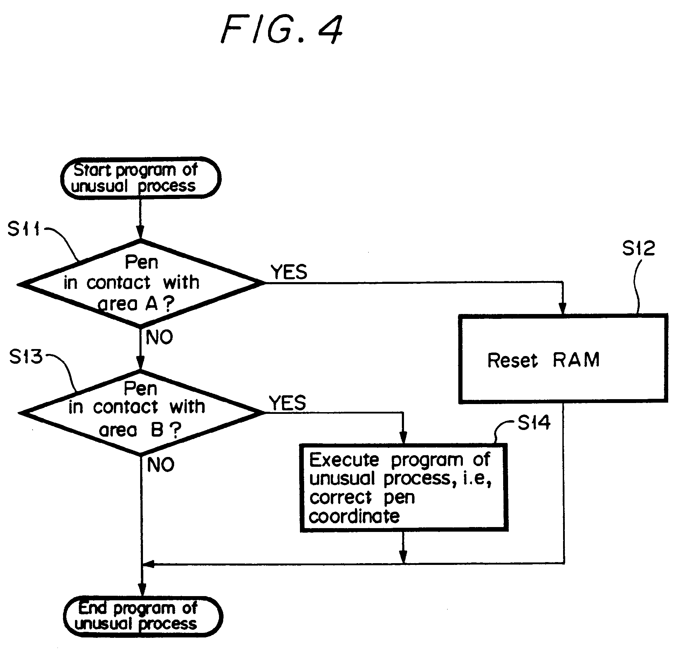

Routines of processing done by the CPU 102 will be explained next with reference to flowcharts of Figures 3 and 4.

In this embodiment, a display process for displaying information on the display unit 7 and other processes are regarded as usual processes while unusual process might be a pen coordinate correction process done when the coordinates of the input pen 11 are considerably displaced and a reset process for resetting the RAM 106 after the CPU 102 has operated improperly.

As will be clear from Figure 1, the input tablet 20 is divided into two areas A and B and the pen coordinate correction process and the reset process for resetting the RAM 106 are assigned, respectively, to the two areas A and B.

Referring to Figure 3, following the start of operation in which the power supply switch 10 is turned ON, it is determined in decision step S1 whether or not the input pen 11 is touching the tablet 20. If not, then the processing proceeds to step S4 for usual process execution. If the power supply switch 10 is turned OFF as represented by a YES at decision step S5, then the processing is ended.

On the other hand, if the input pen 11 touches the tablet 20 as represented by a YES at decision step S1, then the processing proceeds to the next decision step S3, whereat it is determined whether or not the point of the input pen 11 is in contact with the particular areas, that is, areas A and B. If the point of the input pen 11 is in contact with the area A or B as represented by a YES at decision step S3, then the processing proceeds to step S10, for unusual process execution.

Referring to Figure 4, which shows step S10 is greater detail, it is determined in decision step S11 whether or not the point of the input pen 11 is in contact with the area A. If so, then the processing proceeds to step S12, whereat the RAM 106 is reset. If a NO is output at step S11, then the processing proceeds to the next decision step S13, whereat it is determined whether or not the point of the input pen 11 is in contact with the area B. If so, then the processing proceeds to step S14, whereat the pen coordinate correction mode is executed. In this pen coordinate correction mode, a target (e.g. a cross-shaped mark) is displayed on the display, and when the user touches the cross point of the cross-shaped mark with the point of the input pen 11, parallax data between the input coordinate to the input tablet 20 and a displayed picture is obtained. Thereafter, the input coordinate information can be corrected on the basis of the thus obtained data.

A special mode for servicemen or the like may be considered an another unusual process. In that case, such special mode must be hidden from the user upon use and an area used to effect this special mode is preferably a very small area of the corner of the input tablet 20. If a NO is output at decision step S13, then the unusual program is ended.

In that event, at the completion of processing at steps S12 and S14, the unusual process is ended and the processing returns to step S1 of Figure 3, and the following steps are executed similarly as described above.

As described above, according to this embodiment, if the power switch 10 is turned ON under the condition that the input pen 11 is in contact with either of the areas A and B, then the unusual process is executed (see step S10).

Accordingly, since the unusual process need not be executed by operating a plurality of operation switch buttons and hence the number of such switch buttons is reduced, the portable computer 1 can be simplified in arrangement, made inexpensive and light in weight.

If there is a single unusual process, the tablet 20 need not be divided into the two areas A and B and therefore the unusual process can be executed under the condition such that the input pen 11 is brought in contact with one portion of the tablet 20. On the other hand, if there are more than three unusual processes, the tablet 20 will be divided into a corresponding number of areas.

Alternatively, when there are a plurality of unusual processes, the input tablet 20 need not be divided into a plurality of areas but a number of clicks done by the input pen 11 is made to correspond to the number of unusual processes uniquely so that, if the input pen 11 is clocked twice, the RAM 106 is reset, and if the input pen 11 is clicked three times, the unusual process of pen coordinate correction is executed.

Incidentally, the above-mentioned condition that the input pen 11 is brought in contact with the input tablet 20 may be detected by various methods, such as detecting electrostatic capacitance under the condition that a switch provided on the point of pen is turned ON, detecting that a predetermined pressure is applied to a pressure sensitive tablet by a pen and so on.

As will be understood from the aforenoted explanation, the input information processing apparatus according to the present invention includes the control section which executes the unusual process when the power switch is turned ON under the condition that the point of the input pen is brought in contact with the desired area of the input tablet.

Accordingly, when the unusual process is to be executed, it is executed only by operating the input pen and the power switch. As a consequence, the number of various switch buttons provided in the input information processing apparatus can be reduced, which can provide a simplified, inexpensive and light-weighted input information processing apparatus.

## Claims

1. An input information processing apparatus, comprising:
a pointer (11) for inputting coordinate information;
a display (7) for displaying data input by the pointer;
a tablet (20) positioned on a display surface of the display for detecting a position pointed to by the pointer;
a power switch (10); and
control means (102) for judging whether or not the pointer is pointing at a predetermined area of the tablet as the power switch is switched on, and if so for executing an unusual process (S12);
characterised in that:
said predetermined area of the tablet corresponds to an area (A) of the display surface which is normally used for displaying data input by the pointer.

2. An apparatus as claimed in claim 1, wherein the control means is operable to judge whether or not, as the power switch is switched on, the pointer is pointing at one of a plurality of such predetermined areas of the tablet corresponding to areas of the display surface normally used for displaying input data, and if so to execute a respective one of a plurality of such unusual processes (S12,S14).

3. An apparatus as claimed in claim 1 or claim 2, wherein the unusual process, or one of the unusual processes, comprises an initialising process of the apparatus.

4. An apparatus as claimed in any preceding claims, further comprising a memory for storing data, and wherein the unusual process, or one of the unusual processes, comprises a process (S12) for resetting the memory.

5. An apparatus as claimed in any preceding claim, wherein the unusual process or one of the unusual processes, comprises a process (S14) for calibrating the pointer and tablet with respect to the display.

6. An apparatus as claimed in any preceding claim, wherein the unusual process, or one of the unusual processes, comprises a process for a service person, and the respective area of the display surface is a small area at a corner of the display surface.

7. An apparatus as claimed in any preceding claim, wherein said area of the display surface, or the sum of said areas of the display surface, substantially fills the total area of the display surface.

## Patentansprüche

1. Eingabeinformationsverarbeitungsgerät, das folgendes aufweist:
einen Zeiger (11) zum Eingeben von Koordinateninformationen;
eine Anzeige (7) zum Anzeigen von Daten, die durch den Zeiger eingegeben sind;
ein auf einer Anzeigenoberfläche der Anzeige positioniertes Tablett (20) zur Detektion einer Position, die durch den Zeiger angezeigt wird;
einen Leistungsschalter (10); und
Steuermittel (102) zur Beurteilung, ob der Zeiger auf einen vorbestimmten Bereich des Tabletts zeigt oder nicht, wenn der Leistungsschalter eingeschaltet ist, und, wenn dem so ist, zur Ausführung eines außergewöhnlichen Verfahrens (S12);
**dadurch gekennzeichnet**, daß:
der vorbestimmte Bereich des Tablettes mit einem Bereich (A) der Anzeigenoberfläche korrespondiert, die normalerweise für die Anzeige von Daten verwendet wird, die durch den Zeiger eingegeben sind.

2. Gerät nach Anspruch 1, worin das Steuermittel funktionsfähig ist, zur Beurteilung, ob, wenn der Leistungsschalter eingeschaltet ist, der Zeiger auf einen von einer Vielzahl von solchen vorbestimmten Bereichen des Tablettes zeigt, die mit den Bereichen der Anzeigenoberfläche korrespondieren, die normalerweise zur Anzeige von Eingabedaten verwendet werden, oder nicht, und wenn dem so ist, um ein entsprechendes von einer Vielzahl von solchen außergewöhnlichen Verfahren auszuführen (S12, S14).

3. Gerät nach Anspruch 1 oder 2, worin das außergewöhnliche Verfahren oder eines der außergewöhnlichen Verfahren ein Initialisierungsverfahren des Gerätes beinhaltet.

4. Gerät nach einem der vorhergehenden Ansprüche, welches weiterhin einen Speicher zur Speicherung von Daten aufweist und worin das außergewöhnliche Verfahren oder eines der außergewöhnlichen Verfahren ein Verfahren (S12) zum Zurücksetzen des Speichers beinhaltet.

5. Gerät nach einem der vorhergehenden Ansprüche, worin das außergewöhnliche Verfahren oder eines der außergewöhnlichen Verfahren ein Verfahren (S14) zur Kalibrierung des Zeigers und des Tablettes relativ zu der Anzeige aufweist.

6. Gerät nach einem der vorhergehenden Ansprüche, worin das außergewöhnliche Verfahren oder eines der außergewöhnlichen Verfahren ein Verfahren für eine Bedienperson aufweist und der entsprechende Bereich in der Anzeigenoberfläche ein kleiner Bereich an einer Ecke der Anzeigenoberfläche ist.

7. Gerät nach einem der vorhergehenden Ansprüche, worin der Bereich der Anzeigenoberfläche oder die Summe der Bereiche der Anzeigenoberfläche im wesentlichen den ganzen Bereich der Anzeigenoberfläche ausfüllt.

## Revendications

1. Un dispositif de traitement d'information d'entrée, comprenant :
un élément de pointage (11), pour entrer une information de coordonnées ;
un affichage (7), pour afficher des données entrées par l'élément de pointage ;
une tablette (20), positionnée sur une surface d'affichage de l'affichage, pour détecter une position pointée par l'élément de pointage ;
un interrupteur (10) de puissance électrique ; et
des moyens (102) de commande, pour juger si oui ou non l'élément de pointage est en cours de pointage à une zone prédéterminée de la tablette, lorsque l'interrupteur de puissance électrique est commutée en service, et s'il en est ainsi, pour exécuter un processus exceptionnel (S12) ;
caractérisé en ce que :
ladite zone prédéterminée de la tablette correspond à une zone (A) de la surface d'affichage, qui est normalement employée pour afficher des données entrées par l'élément de pointage.

2. Un dispositif tel que revendiqué dans la revendication 1, dans lequel, les moyens de commande sont susceptibles d'être mis en oeuvre pour juger si oui ou non, lorsque l'interrupteur de puissance électrique est commuté en service, l'élément de pointage est en cours de pointage à une zone d'une pluralité de telles zones prédéterminées de la tablette correspondant à des zones de la surface d'affichage normalement employées pour afficher des données d'entrée, et s'il en est ainsi, afin d'exécuter un processus respectif d'une pluralité de tels processus exceptionnels (S12, S14).

3. Un dispositif tel que revendiqué dans la revendication 1 ou la revendication 2, dans lequel le processus exceptionnel, ou un des processus exceptionnels, comprend un processus d'initialisation du dispositif.

4. Un dispositif tel que revendiqué dans une quelconque précédente revendication, comprenant de plus une mémoire pour emmagasiner des données, et dans lequel le processus exceptionnel, ou un des processus exceptionnels, comprend un processus (S12) pour restaurer la mémoire.

5. Un dispositif tel que revendiqué dans une quelconque précédente revendication, dans lequel le processus exceptionnel, ou un des processus exceptionnels, comprend un processus (S14), pour étalonner l'élément de pointage et la tablette par rapport à l'affichage.

6. Un dispositif tel que revendiqué dans une quelconque précédente revendication, dans lequel le processus exceptionnel, ou un des processus exceptionnels, comprend un processus pour une personne de dépannage, et la zone respective de la surface d'affichage est une petite zone à un coin de la surface d'affichage.

7. Un dispositif tel que revendiqué dans une quelconque précédente revendication, dans lequel ladite zone de la surface d'affichage, ou la somme de dites zones de la surface d'affichage, remplit sensiblement la zone totale de la surface d'affichage.
